# EUROPEAN PATENT APPLICATION

(11) **EP 4 815 560 A1**
(43) Date of publication of application: **30.09.2026**
(21) Application number: 24917322.0
(22) Date of filing: 11.12.2024
(51) Int. Cl.: H04W 36/00, H04W 36/30, H04W 36/08, H04W 76/27, H04W 36/22

(54) **ELECTRONIC DEVICE FOR CELL SWITCHING AND OPERATION METHOD THEREOF**

(30) Priority: 08.01.2024 KR 20240003142; 22.02.2024 KR 20240025447
(71) Applicant: Samsung Electronics Co., Ltd., Suwon-si, Gyeonggi-do 16677 (KR)
(72) Inventor: KIM, Junsuk, Suwon-si, Gyeonggi-do 16677 (KR); YANG, Minho, Suwon-si, Gyeonggi-do 16677 (KR); JUNG, Euichang, Suwon-si, Gyeonggi-do 16677 (KR)
(74) Representative: Gulde & Partner
(86) International application number: PCT/KR2024/020268
(87) International publication number: WO 2025/150727

(57) **Abstract**

An embodiment of the present invention relates to a device and method for cell switching in an electronic device. The electronic device comprises a communication circuit, a processor, and a memory. The memory may store instructions which, when executed by the processor, cause the electronic device to: identify a traffic state with a serving cell when it is determined that a measurement report event related to at least one candidate cell has occurred; update a measurement result related to the at least one candidate cell to designated reference value or smaller so as not to attempt a cell change related to the electronic device in the serving cell when, on the basis of the traffic state with the serving cell, it is determined that the event related to the update of the measurement report has occurred; and transmit the updated measurement result related to the at least one candidate cell to the serving cell. Other embodiments may also be possible.

## Description

### [Technical Field]

Embodiments of the disclosure relate to an electronic device for cell switching in a wireless communication system and a method of operating the same.

### [Background Art]

To meet the demand for wireless data traffic having increased since deployment of 4G communication systems, efforts have been made to develop a 5G communication system. Therefore, the 5G communication system is also called a "beyond 4G network" communication system or a "post LTE" system. The 5G communication system is considered to be implemented in 6GHz or lower bands (e.g., about 3.5GHz bands) or higher frequency bands (e.g., about 28GHz bands or about 39GHz bands),,so as to accomplish higher data rates. To decrease the path loss of radio waves and increase the transmission distance of radio waves, beamforming, massive multiple-input multiple-output (massive MIMO), full dimensional MIMO (FD-MIMO), array antenna, analog beamforming, and large scale antenna techniques are under discussion in the 5G communication systems.

The information may be provided as the related art to help understanding of the disclosure. None of the above may be claimed as prior art related to the disclosure, or used to determine the prior art.

### [Disclosure of Invention]

### [Solution to Problem]

A 5G communication system may support an L1/L2 triggered mobility (LTM) function for relatively fast cell switching (or cell movement) of an electronic device (e.g., a user equipment (UE)). For example, the LTM may include a series of operations for switching (or moving) a serving cell of the electronic device to a predetermined candidate cell through signaling in layer 1 (L1) and/or layer 2 (L2).

In the LTM, the serving cell of the electronic device is switched to a preconfigured candidate cell, based on an L1 measurement result, so that cell switching of the electronic device may occur more frequently than a cell switching scheme using layer 3 (L3) signaling in a region where a plurality of cells overlap.

When the electronic device uses the LTM, an activation time of the electronic device may unnecessarily increase due to relatively frequent cell switching. For example, the electronic device may switch to a radio resource control (RRC) idle state or an RRC inactive state when there is no traffic for a predetermined time in an RRC-connected state. However, the electronic device may generate traffic due to frequent cell switching based on the LTM, thereby unnecessarily maintaining the RRC-connected state of the electronic device, which may cause unnecessary power consumption.

An embodiment of the disclosure discloses an apparatus and a method for limiting unnecessary cell switching in the electronic device of an LTM environment.

The technical subjects pursued in the disclosure may not be limited to the above-mentioned technical subjects, and other technical subjects which are not mentioned herein may be clearly understood from the following description by those skilled in the art to which the disclosure pertains.

According to an embodiment, the electronic device may include communication circuitry, at least one processor including a processing circuit, and a memory. According to an embodiment, the memory may be configured to store instructions that, when executed by the at least one processor individually or collectively, cause the electronic device to, when it is determined that a measurement reporting event related to at least one candidate cell has occurred in a communication environment in which cell switching is performed through signaling of layer 1 (L1) and/or layer 2 (L2), identify a traffic state with a serving cell. According to an embodiment, the memory may be configured to store instructions that, when executed by the at least one processor individually or collectively, cause the electronic device to, when it is determined that an event related to an update of a measurement report has occurred based on the traffic state with the serving cell, update a measurement result related to the at least one candidate cell to a predetermined reference value or less, so as not to attempt cell switching related to the electronic device in the serving cell. According to an embodiment, the memory may be configured to store instructions that, when executed by the at least one processor individually or collectively, cause the electronic device to transmit the updated measurement result related to the at least one candidate cell to the serving cell, so as not to attempt cell switching related to the electronic device in the serving cell.

According to an embodiment, a method of operating an electronic device may include, when it is determined that a measurement reporting event related to at least one candidate cell has occurred in a communication environment in which cell switching is performed through signaling of layer 1 (L1) and/or layer 2 (L2), identifying a traffic state with a serving cell. According to an embodiment, the method of operating the electronic device may include, when it is determined that an event related to an update of a measurement report has occurred based on the traffic state with the serving cell, updating a measurement result related to the at least one candidate cell to a predetermined reference value or less, so as not to attempt cell switching related to the electronic device in the serving cell. According to an embodiment, the method of operating the electronic device may include transmitting the updated measurement result related to the at least one candidate cell to the serving cell, so as not to attempt cell switching related to the electronic device in the serving cell.

According to an embodiment, a non-transitory computer-readable storage medium (or computer program product) storing one or more programs may be described. According to an embodiment, the one or more programs may include instructions that, when executed by a processor of an electronic device, cause the electronic device to perform operations of, when it is determined that a measurement reporting event related to at least one candidate cell occurs in a communication environment in which cell switching is performed through signaling of layer 1 (L1) and/or layer 2 (L2), identifying a traffic state with a serving cell, when it is determined that an event related to an update of a measurement report occurs based on the traffic state with the serving cell, updating a measurement result related to the at least one candidate cell to a predetermined reference value or less, so as not to attempt cell switching related to the electronic device in the serving cell, and transmitting the updated measurement result related to the at least one candidate cell to the serving cell.

According to an embodiment of the disclosure, when there is no traffic of the electronic device in the LTM environment, it is possible to reduce unnecessary power consumption due to cell switching of the electronic device by controlling an L1 measurement report not to perform cell switching from the serving cell.

In addition, various other effects that can be understood directly or indirectly from the disclosure may also be provided.

Advantageous effects obtainable from embodiments of the disclosure may not be limited to the above-mentioned effects, and other effects which are not mentioned herein may be clearly understood from the following description by those skilled in the art to which the disclosure pertains.

### [Brief Description of Drawings]

With regard to the description of the drawings, the same or like reference signa may be used to designate the same or like elements.
FIG. 1 is a block diagram of an electronic device in a network environment according to an embodiment.
FIG. 2 illustrates an example for cell switching of an electronic device in an MCG according to an embodiment.
FIG. 3 illustrates an example for cell switching of the electronic device in an SCG according to an embodiment.
FIG. 4 is a block diagram of an electronic device for cell switching according to an embodiment.
FIG. 5 is a flowchart illustrating a process of reporting a measurement result by the electronic device according to an embodiment.
FIG. 6 is a flowchart illustrating a process of identifying a measurement reporting period by the electronic device in an LTM environment according to an embodiment.
FIG. 7 is a flowchart illustrating a process of selectively reporting a measurement result related to a candidate cell by the electronic device according to an embodiment.
FIG. 8 is a flowchart illustrating a process of selectively reporting a measurement result by the electronic device according to an embodiment.
FIG. 9 illustrates an example for cell switching by the electronic device according to an embodiment.

### [Mode for the Invention]

Hereinafter, embodiments will be described in detail with reference to the accompanying drawings.

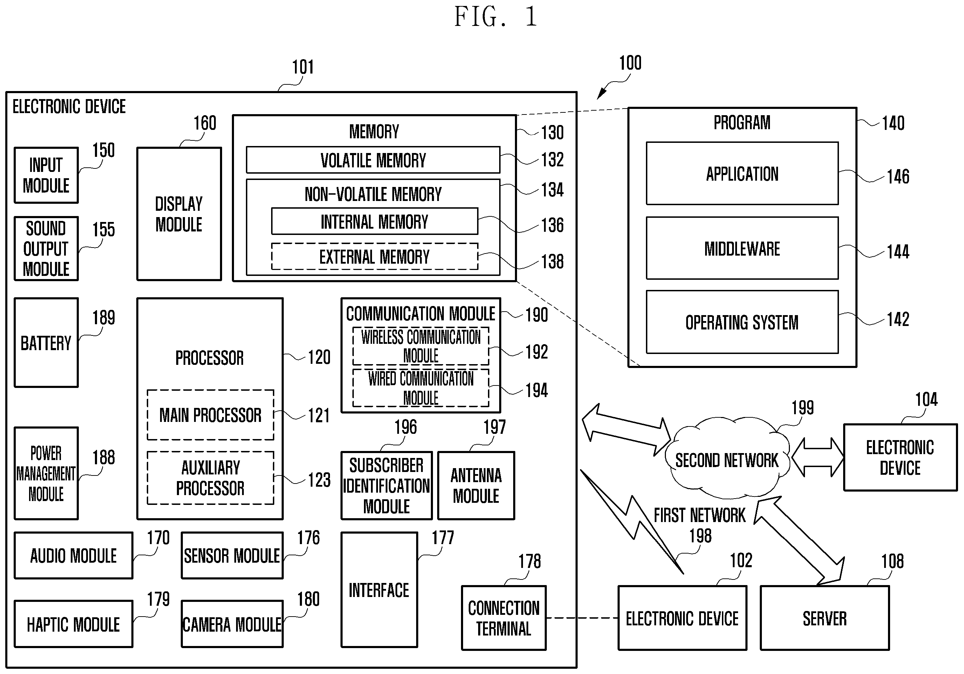

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to an embodiment, the subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include patch array antennas and/or dipole array antennas.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

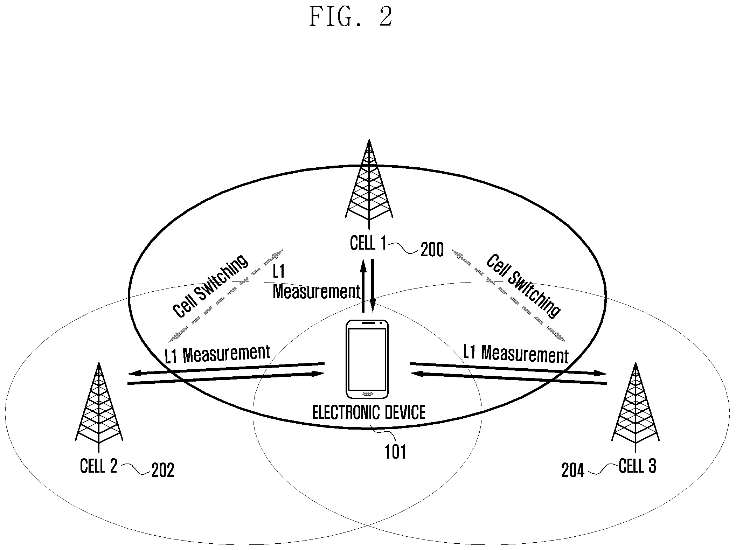

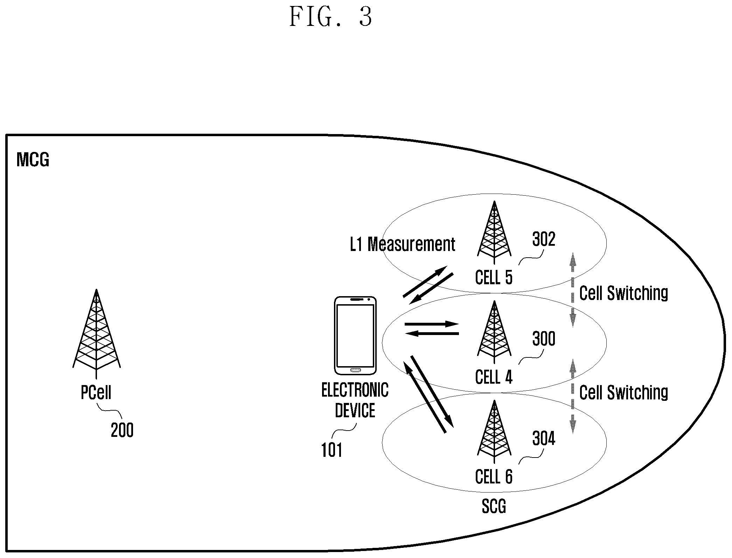

FIG. 2 illustrates an example for cell switching of an electronic device in an MCG according to an embodiment. FIG. 3 illustrates an example for cell switching of the electronic device in an SCG according to an embodiment.

According to an embodiment referring to FIG. 2 and FIG. 3, the electronic device 101 may access a first cell (e.g., a primary cell (Pcell)) 200 of a master cell group (MCG) and a fourth cell (e.g., a primary secondary cell (PScell)) 300 of a secondary cell group (SCG) in a dual connectivity (DC) environment. For example, in the case of E-UTRAN NR dual connectivity (EN-DC), the electronic device 101 may access the first cell 200 supporting long term evolution (LTE) communication and the fourth cell 300 supporting new radio (NR) communication. For example, in the case of next generation RAN E-UTRA NR dual connectivity (NGEN-DC), the electronic device 101 may access the first cell 200 supporting LTE communication and the fourth cell 300 NR communication. For example, in the case of NR E-UTRA dual connectivity (NE-DC), the electronic device 101 may access the first cell 200 supporting NR communication and the fourth cell 300 supporting LTE communication. For example, in the case of NR-DC (NR dual connectivity), the electronic device 101 may access the first cell 200 supporting a first frequency band of the NR communication and the fourth cell 300 supporting a second frequency band of the NR communication. For example, the cells 300, 302, and 304 of the SCG in FIG. 3 are illustrated as being physically separated for the sake of description, but this is not limitative.

According to an embodiment, the electronic device 101 may independently perform cell switching in the MCG and cell switching in the SCG by using L1/L2 triggered mobility or lower layer triggered mobility (LTM). For example, the LTM may include a series of operations for switching (or moving) the cell (or serving cell) of the electronic device through layer 1 (L1) and/or layer 2 (L2) signaling.

For example, the electronic device 101 may perform L3 (layer3) channel measurement related to the MCG, based on configuration information on L3 channel measurement acquired from the first cell (e.g., serving cell) 200 within the MCG. The electronic device 101 may report the L3 channel measurement result to the first cell (e.g., serving cell) 200. For example, the L3 channel measurement related to the MCG may include a series of operations of measuring a channel for the first cell (e.g., serving cell) 200 in the MCG and a cell (or a neighbor cell) (e.g., second cell 202 and/or third cell 204) accessible by the electronic device 101. For example, the L3 channel measurement may include a series of operations of measuring the channel state of the cell for a predetermined time in L3. For example, L3 may be a layer for processing a control signal transmitted/received to/from the serving cell 200 by the electronic device 101, and may include a radio resource control (RRC) layer and a non-access stratum (NAS) layer. For example, the serving cell may be a cell (e.g., first cell 200) which the electronic device 101 accesses to transmit and/or receive data to and/or from the electronic device 101, and may include a primary cell (Pcell) within the MCG.

For example, the first cell 200 may identify (or select) at least one candidate cell (e.g., the second cell 202 and/or the third cell 204) that can be switched by the electronic device 101 through the LTM, based on the L3 measurement result received from the electronic device 101. The first cell 200 may transmit configuration information related to at least one candidate cell to the electronic device 101. For example, the configuration information related to the at least one candidate cell may include information related to the frequency of the candidate cell, a synchronization signal (e.g., a synchronization signal block (SSB)), or L1 measurement. For example, the information related to the L1 measurement may include at least one of an L1 measurement time point (or period) or an L1 measurement reporting time point (or period). For example, the candidate cell (e.g., the second cell 202 and/or the third cell 204) may include at least one cell having the L3 channel measurement result that exceeds a predetermined first reference value among the cells (e.g., neighbor cells) accessible by the electronic device 101. For example, the channel measurement result may include at least one of a received signal strength indication (RSSI), a reference signal received quality (RSRQ), a reference signal received power (RSRP), a signal to noise ratio (SNR), a signal to interference and noise ratio (SINR), a quality of service (QoS), or a bit error rate (BER) of the cell measured by the electronic device 101.

For example, the electronic device 101 may perform L1 measurement for the first cell (e.g., serving cell) 200 and at least one candidate cell, based on the configuration information related to the at least one candidate cell. For example, the L1 channel measurement may include a series of operations for measuring the channel state of the cell, based on a signal processed in layer 1 (L1). For example, L1 may include a physical layer of the electronic device 101.

For example, the electronic device 101 may adaptively perform reporting of the L1 measurement result, based on a traffic state of the electronic device 101. For example, when it is determined that a predetermined measurement result update event has not occurred based on the traffic state of the electronic device 101, the electronic device 101 may transmit the L1 measurement result to the first cell (e.g., serving cell) 200. For example, when it is determined that a predetermined measurement result update event has occurred based on the traffic state of the electronic device 101, the electronic device 101 may transmit an updated L1 measurement result to the first cell (e.g., serving cell) 200 or may limit transmission of the L1 measurement result. For example, the predetermined measurement result update event may be generated when it is determined that the electronic device 101 has no traffic at an L1 measurement reporting time point. For example, a state in which it is determined that the electronic device 101 has no traffic at the L1 measurement reporting time point may include a state in which there is no traffic for a predetermined first reference time before the L1 measurement reporting time point, a state in which there is no traffic at the L1 measurement reporting time point, or a state in which it is estimated that there is no traffic for a predetermined second reference time after the L1 measurement reporting time point. For example, the state in which there is no traffic may include a state in which the amount (or average value) of data transmitted and/or received to and/or from the serving cell by the electronic device 101 is equal to or less than a predetermined reference traffic amount. For example, the predetermined reference traffic amount may indicate a reference value (e.g., 0) configured to determine whether the predetermined measurement result update event has occurred.

For example, when it is determined that the predetermined measurement result update event has occurred, the electronic device 101 may update then L1 measurement result related to the candidate cell to a predetermined second reference value so as not to attempt cell switching associated with the electronic device 101 in the first cell (e.g., serving cell) 200. For example, the electronic device 101 may transmit (or report) the L1 measurement result related to the first cell (e.g., serving cell) 200 to the first cell (e.g., serving cell) 200 without updating the L1 measurement result. For example, the predetermined second reference value may include a value smaller than the channel state of the first cell (e.g., serving cell) 200 or a predetermined minimum value.

For example, when it is determined that the predetermined measurement result update event has occurred, the electronic device 101 may transmit (or report) the L1 measurement result related to the first cell (e.g., serving cell) 200 excluding the L1 measurement result related to the candidate cell to the first cell (e.g., serving cell) 200, so as not to attempt cell switching related to the electronic device 101 in the first cell (e.g., serving cell) 200. The electronic device 101 may limit the transmission of the L1 measurement result related to at least one candidate cell.

For example, when receiving a control signal related to cell switching from the first cell 200, the electronic device 101 may perform cell switching to a candidate cell (e.g., the second cell 202 or the third cell 204) within the MCG included in the control signal related to the cell switching.

For example, the electronic device 101 may perform layer3 (L3) channel measurement related to the SCG, based on configuration information related to the L3 channel measurement acquired from a fourth cell (e.g., serving cell) 300 within the SCG. The electronic device 101 may report (or transmit) the L3 channel measurement result to the fourth cell (e.g., serving cell) 300. For example, the L3 channel measurement related to the SCG may include a series of operations of measuring a channel for the fourth cell (e.g., serving cell) 300 in the SCG and a cell (or neighbor cell) (e.g., a fifth cell 302 and/or a sixth cell 304) accessible by the electronic device 101. For example, the serving cell is a cell (e.g., fourth cell 300) which the electronic device 101 accesses to transmit and/or receive data to and/or from the electronic device 101, and may include a primary secondary cell (PScell) in an SCG.

For example, the fourth cell 300 may identify (or select) at least one candidate cell (e.g., the fifth cell 302 and/or the sixth cell 304) that can be switched by the electronic device 101 through the LTM, based on the L3 measurement result received from the electronic device 101. The fourth cell 300 may transmit configuration information related to at least one candidate cell to the electronic device 101. For example, the candidate cell (e.g., the fifth cell 302 and/or the sixth cell 304) may include at least one cell having the L3 channel measurement result that exceeds a predetermined first reference value among the cells (e.g., neighbor cells) accessible by the electronic device 101.

For example, the electronic device 101 may perform L1 measurement for the fourth cell (e.g., serving cell) 300 and at least one candidate cell, based on the configuration information related to the at least one candidate cell. For example, the L1 channel measurement may include a series of operations for measuring the channel state of the cell, based on a signal processed in layer 1 (L1). For example, L1 may include a physical layer of the electronic device 101.

For example, the electronic device 101 may adaptively perform reporting of the L1 measurement result, based on a traffic state of the electronic device 101. For example, when it is determined that a predetermined measurement result update event has not occurred based on the traffic state of the electronic device 101, the electronic device 101 may transmit the L1 measurement result to the fourth cell (e.g., serving cell) 300. For example, when it is determined that a predetermined measurement result update event has occurred based on the traffic state of the electronic device 101, the electronic device 101 may transmit an updated L1 measurement result to the fourth cell (e.g., serving cell) 300 or may limit transmission of the L1 measurement result. For example, the predetermined measurement result update event may occur when it is determined that there is no traffic of the electronic device 101. For example, the state in which there is no traffic may include a state in which the traffic amount of the electronic device 101 is lower than a predetermined reference traffic amount. For example, the reference traffic amount may indicate a reference value (e.g., 0) configured to determine whether a predetermined measurement result update event has occurred.

For example, when it is determined that the predetermined measurement result update event has occurred, the electronic device 101 may update the L1 measurement result related to the candidate cell to a predetermined second reference value so as not to attempt cell switching related to the electronic device 101 in the fourth cell (e.g., serving cell) 300. For example, the electronic device 101 may transmit (or report) the L1 measurement result related to the fourth cell (e.g., serving cell) 300 to the fourth cell (e.g., serving cell) 300 without any update. For example, the predetermined second reference value may include a value smaller than the channel state of the fourth cell (e.g., serving cell) 300 or a predetermined minimum value.

For example, when it is determined that the predetermined measurement result update event has occurred, the electronic device 101 may transmit (or report) the L1 measurement result related to the fourth cell (e.g., serving cell) 300 excluding the L1 measurement result related to the candidate cell to the fourth cell (e.g., serving cell) 300, so as not to attempt cell switching related to the electronic device 101 in the fourth cell (e.g., serving cell) 300. The electronic device 101 may limit the transmission of the L1 measurement result associated with at least one candidate cell.

For example, when receiving a control signal related to cell switching from the fourth cell 300, the electronic device 101 may perform cell switching to a candidate cell (e.g., the fifth cell 302 or the sixth cell 304) within the SCG included in the control signal related to the cell switching.

According to an embodiment, the LTM may provide fast cell switching between preconfigured candidate cells so as to minimize the time (e.g., interruption time) during which communication is interrupted by the cell switching. When the LTM is used, the electronic device 101 may reduce power consumption (or current consumption) due to the LTM by adaptively performing the reporting of the L1 measurement result, based on the traffic state of the electronic device 101, thereby reducing unnecessary cell switching in a state in which there is no traffic of the electronic device 101.

According to an embodiment, the electronic device 101 may perform cell switching (or movement) through the LTM even in a state of accessing one cell that is not a DC environment.

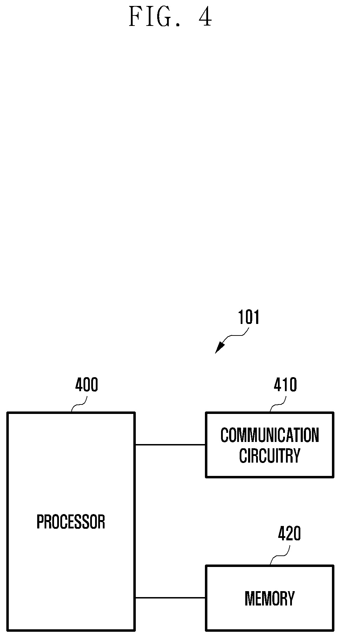

FIG. 4 is a block diagram of an electronic device for cell switching according to an embodiment. For example, the electronic device 101 in FIG. 4 may be at least partially similar to the electronic device 101 in FIG. 1, FIG. 2, or FIG. 3, or may include other embodiments of the electronic device 101.

According to an embodiment referring to FIG. 4, the electronic device 101 may include at least one of a processor 400, communication circuitry 410, or a memory 420. For example, the processor 400 may be substantially the same as the processor 120 of FIG. 1 or may be included in the processor 120. The communication circuitry 410 may be substantially the same as the wireless communication module 192 of FIG. 1 or included in the wireless communication module 192. The memory 420 may be substantially the same as the memory 130 of FIG. 1 or may be included in the memory 130. For example, the processor 400 may include a communication processor. For example, the processor 400 may be operatively, functionally, and/or electrically connected to at least one of the communication circuitry 410 or the memory 420. For example, the processor 400 may include at least one processor including a processing circuit.

According to an embodiment, when accessing a serving cell (e.g., the first cell 200 in FIG. 2 or the fourth cell 300 in FIG. 3), the processor 400 may control the communication circuitry 410 to transmit the L3 measurement result to the serving cell. For example, the processor 400 may control the communication circuitry 410 to perform L3 channel measurement on the serving cell and cells (e.g., neighbor cells) accessible by the electronic device 101, based on configuration information related to the L3 channel measurement acquired from the serving cell. For example, the L3 channel measurement may include a series of operations of measuring the channel state of the cell for a predetermined time in the L3. For example, L3 may be a layer for processing a control signal transmitted/received to/from the serving cell 200 by the electronic device 101, and may include a radio resource control (RRC) layer and a non-access stratum (NAS) layer.

For example, the processor 400 may identify whether a predetermined first measurement reporting event occurs, based on the L3 channel measurement result. When it is determined that the predetermined first measurement reporting event has occurred, the processor 400 may control the communication circuitry 410 to transmit the L3 channel measurement result to the serving cell. For example, the predetermined first measurement reporting event may be generated when the channel state of the serving cell is lower than a predetermined third reference value, based on the L3 channel measurement result. For example, the predetermined first measurement reporting event may be generated when a cell having a channel state that is greater than the channel state of the serving cell by the predetermined third reference value or more exists among the cells accessible by the electronic device 101, based on the L3 channel measurement result.

According to an embodiment, the processor 400 may acquire, through the communication circuitry 410, configuration information related to at least one candidate cell for L1/L2 triggered mobility or lower layer triggered mobility (LTM) from the serving cell. For example, the LTM may include a series of operations for switching (or moving) the cell (or serving cell) of the electronic device through signaling in a layer lower than layer 3 (L3). For example, the signaling in the layer lower than L3 may include signaling of L1 or signaling of L1 and L2. For example, L1 may include a physical layer of the electronic device 101. For example, L2 may include at least one of a media access control (MAC) layer, a radio link control (RLC) layer, a packet data convergence protocol (PDCP) layer, or a service data adaptation protocol (SDAP) layer. For example, the configuration information related to the at least one candidate cell may include information related to the frequency of the candidate cell, a synchronization signal (e.g., a synchronization signal block (SSB)), or L1 measurement. For example, the information related to the L1 measurement may include at least one of an L1 measurement time point (or period) or an L1 measurement reporting time point (or period). For example, the candidate cell may include at least one cell (e.g., the second cell 202 and the third cell 204 in FIG. 2, or the fifth cell 302 and the sixth cell 304 in FIG. 3) having the L3 channel measurement result that exceeds the predetermined first reference value among the cells (e.g., neighbor cells) accessible by the electronic device 101. For example, the channel measurement result may include at least one of a received signal strength indication (RSSI), a reference signal received quality (RSRQ), a reference signal received power (RSRP), a signal to noise ratio (SNR), a signal to interference and noise ratio (SINR), a quality of service (QoS), or a bit error rate (BER) of the cell measured by the electronic device 101.

According to an embodiment, the processor 400 may control the communication circuitry 410 to perform downlink (DL) and/or uplink (UL) synchronization with at least one candidate cell, based on configuration information related to at least one candidate cell. For example, the processor 400 may receive a synchronization signal of at least one candidate cell through the communication circuitry 410, based on information related to a synchronization signal included in the configuration information related to at least one candidate cell. The processor 400 may perform DL synchronization with each candidate cell, based on a synchronization signal of at least one candidate cell.

For example, the processor 400 may control the communication circuitry 410 to transmit information (e.g., RACH preamble) related to a random access channel (RACH) to each of at least one candidate cell. The processor 400 may perform UL synchronization with each candidate cell, based on a response signal for information related to the RACH received from each candidate cell. For example, the response signal for the information related to the RACH may be included in a control signal related to cell switching indicating cell switching of the electronic device 101 in the serving cell.

According to an embodiment, the processor 400 may control the communication circuitry 410 to perform L1 measurement for the serving cell and at least one candidate cell, based on the configuration information related to at least one candidate cell. For example, when it is determined that a predetermined second measurement reporting event has occurred, the processor 400 may control the communication circuitry 410 to perform L1 channel measurement for the serving cell and at least one candidate cell (e.g., the second cell 202 and the third cell 204 in FIG. 2 or the fifth cell 302 and the sixth cell 304 in FIG. 3). For example, the second measurement reporting event may be generated when a time point (or period) of an L1 channel acquired from the serving cell arrives. For example, the L1 channel measurement may include a series of operations for measuring the channel state of the cell, based on a signal processed in layer 1 (L1).

According to an embodiment, when it is determined that the predetermined second measurement reporting event has occurred, the processor 400 may determine a measurement reporting format, based on the traffic state of the electronic device 101. For example, the traffic state may be identified, based on the amount of data transmitted and/or received to and/or from the serving cell by the electronic device 101. For example, the traffic state may be identified (or estimated) based on at least one of the transmission block (TB) size or the buffer state.

For example, when it is determined that the predetermined measurement result update event has not occurred, based on the traffic state of the electronic device 101, the processor 400 may select a first measurement reporting format for an L1 channel measurement report. For example, when it is determined that the electronic device 101 has traffic at the L1 measurement reporting time, the predetermined measurement result update event may not occur. For example, the state in which traffic exists may include a state in which the amount (e.g., average value) of data transmitted and/or received to and/or from the serving cell by the electronic device 101 for a predetermined first reference time earlier than the L1 measurement reporting time exceeds a predetermined reference traffic amount, a state in which the amount (e.g., average value) of data transmitted and/or received to and/or from the serving cell by the electronic device 101 at the L1 measurement reporting time exceeds a predetermined reference traffic amount, and a state in which it is estimated that the amount (e.g., average value) of data transmitted and/or received to and/or from the serving cell by the electronic device 101 for a predetermined second reference time after the L1 measurement reporting time exceeds a predetermined reference traffic amount. For example, the predetermined reference traffic amount may indicate a reference value (e.g., 0) configured to determine whether the predetermined measurement result update event has occurred.

For example, when it is determined that the predetermined measurement result update event has occurred, based on the traffic state of the electronic device 101, the processor 400 may determine that the electronic device is to operate in a restricted LTM mode. The processor 400 may select a second measurement reporting format, a third measurement reporting format, or a fourth measurement reporting format for the L1 channel measurement report, based on the operation in the restricted LTM mode. For example, the predetermined measurement result update event may be generated when it is determined that the electronic device 101 has no traffic at the L1 measurement reporting time point. For example, the state in which no traffic exists may include a state in which the amount (e.g., average value) of data transmitted and/or received to and/or from the serving cell by the electronic device 101 for a predetermined first reference time earlier than the L1 measurement reporting time is equal to or less than a predetermined reference traffic amount, a state in which the amount (e.g., average value) of data transmitted and/or received to and/or from the serving cell by the electronic device 101 at the L1 measurement reporting time is equal to or less than a predetermined reference traffic amount, and a state in which it is estimated that the amount (e.g., average value) of data transmitted and/or received to and/or from the serving cell by the electronic device 101 for a predetermined second reference time after the L1 measurement reporting time is equal to or less than a predetermined reference traffic amount. For example, the predetermined second reference time may be configured based on a reference time (e.g., the operation time of an inactivity timer) configured to determine whether to switch the electronic device 101 in the radio resource control (RRC)-connected state to an RRC idle state or an RRC inactive state.

According to an embodiment, when the first measurement reporting format is selected, the processor 400 may control the communication circuitry 410 to transmit the L1 measurement result related to the serving cell and at least one candidate cell to the serving cell.

According to an embodiment, when the second measurement reporting format is selected, the processor 400 may update the L1 measurement result related to the candidate cell to the predetermined second reference value so as not to attempt cell switching related to the electronic device 101 in the serving cell. The processor 400 may control the communication circuitry 410 to transmit the L1 measurement result related to the serving cell and the updated L1 measurement result related to the at least one candidate cell to the serving cell. For example, the predetermined second reference value may include a value smaller than the channel state of the first cell (e.g., serving cell) 200 or a predetermined minimum value.

According to an embodiment, when the third measurement reporting format is selected, the processor 400 may control the communication circuitry 410 to transmit, to the serving cell, the L1 measurement result related to the serving cell, excluding the updated L1 measurement result related to at least one candidate cell, so as not to attempt cell switching related to the electronic device 101 in the serving cell. For example, the processor 400 may control the communication circuitry 410 to limit the transmission of the L1 measurement result related to at least one candidate cell.

According to an embodiment, when the fourth measurement reporting type is selected, the processor 400 may control the communication circuitry 410 to limit the transmission of the L1 measurement result.

According to an embodiment, when a control signal related to cell switching is received from the serving cell, the processor 400 may control the communication circuitry 410 to perform cell switching to a candidate cell (e.g., the second cell 202 or the third cell 204 in FIG. 2) included in the control signal related to the cell switching. For example, the communication circuitry 410 may perform switching to a candidate cell included in the control signal related to cell switching, based on configuration information related to at least one candidate cell acquired from the serving cell and synchronization with each candidate cell. For example, when DL and/or UL synchronization with the candidate cell is not performed, the communication circuitry 410 may additionally perform the DL and/or UL synchronization through a RACH procedure with the candidate cell.

According to an embodiment, the communication circuitry 410 may perform wireless communication between the electronic device 101 and an external device (e.g., the electronic device 102 or 104 in FIG. 1, the first cell 200, the second cell 202, or the third cell 204 in FIG. 2, or the fourth cell 300, the fifth cell 302, or the sixth cell 304 in FIG. 3). For example, wireless communication may include a series of operations of transmitting and/or receiving a message.

According to an embodiment, the memory 420 may store various pieces of data used by at least one component (for example, the processor 400 and/or the communication circuitry 410) of the electronic device 101. For example, the memory 420 may store various instructions executable through the processor 400. For example, the instructions may be executed individually or collectively by the processor 400 (e.g., at least one processor).

According to an embodiment, an electronic device (e.g., the electronic device 101 of FIG. 1, 2, 3, or 4) may include communication circuitry (e.g., the wireless communication module 192 in FIG. 1 or the communication circuit 410 in FIG. 4), at least one processor (e.g., the processor 120 in FIG. 1 or the processor 400 in FIG. 4) including a processing circuit, and a memory (e.g., the memory 130 in FIG. 1 or the memory 420 in FIG. 4). According to an embodiment, the memory may be configured to store instructions causing, when individually or collectively executed by the at least one processor, the electronic device to, when it is determined that a measurement reporting event related to at least one candidate cell has occurred in a communication environment in which cell switching is performed through signaling of layer 1 (L1) and/or layer 2 (L2), identify a traffic state with a serving cell. According to an embodiment, the memory may be configured to store instructions causing, when individually or collectively executed by the at least one processor, the electronic device to, when it is determined that an event related to an update of the measurement report occurs based on a traffic state with the serving cell, update a measurement result related to at least one candidate cell to a predetermined reference value or less, so as not to attempt cell switching related to the electronic device in the serving cell. According to an embodiment, the memory may be configured to store instructions causing, when individually or collectively executed by the at least one processor, the electronic device to, transmit the updated measurement result related to the at least one candidate cell to the serving cell, so as not to attempt cell switching related to the electronic device in the serving cell.

According to an embodiment, the memory may be configured to store instructions causing, when individually or collectively executed by the at least one processor, the electronic device to acquire configuration information related to at least one candidate cell from the serving cell in a state in which the electronic device accesses the serving cell. According to an embodiment, the memory may be configured to store instructions causing, when individually or collectively executed by the at least one processor, the electronic device to perform synchronization related to at least one of downlink (DL) or uplink (UL) with at least one candidate cell.

According to an embodiment, the memory may be configured to store instructions causing, when individually or collectively executed by the at least one processor, the electronic device to, when it is estimated that an amount of traffic with the serving cell for a predetermined first time is equal to or lower than a predetermined reference amount, based on determination that the measurement reporting event related to the at least one candidate cell, determine that the event related to the update of the measurement report has occurred.

According to an embodiment, the predetermined first time may be configured based on a time interval configured to switch a radio resource control (RRC) state with the serving cell.

According to an embodiment, the memory may be configured to store instructions causing, when individually or collectively executed by the at least one processor, the electronic device to, when it is identified that an amount of traffic with the serving cell for a predetermined second time is equal to or lower than a predetermined reference amount, based on determination that the measurement reporting event related to the at least one candidate cell, determine that the event related to the update of the measurement report has occurred.

According to an embodiment, the predetermined reference value may be configured based on the measurement result of the serving cell.

According to an embodiment, the memory may be configured to store instructions causing, when individually or collectively executed by the at least one processor, the electronic device to, when it is determined that the event related to the update of the measurement report has not occurred based on an amount of traffic with the serving cell, transmit the measurement result related to the at least one candidate cell to the serving cell.

According to an embodiment, the memory may be configured to store instructions causing, when individually or collectively executed by the at least one processor, the electronic device to, when a measurement reporting period related to at least one candidate cell acquired from the serving cell has arrived in a communication environment in which cell switching is performed through the signaling of L1 and/or L2, determine that the measurement reporting event has occurred.

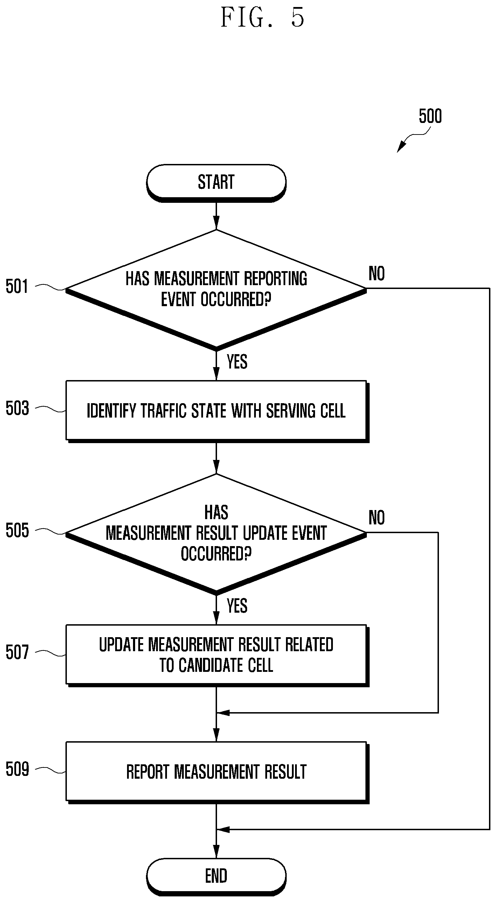

FIG. 5 is a flowchart 500 illustrating a process of reporting a measurement result by an electronic device according to an embodiment. In the following embodiments, respective operations may be sequentially performed but the sequential performance is not necessary. For example, orders of the operations may be changed, and at least two operations may be performed in parallel. For example, the electronic device of FIG. 5 may be the electronic device 101 of FIG. 1, 2, 3, or 4.

According to an embodiment referring to FIG. 5, the electronic device (e.g., the processor 120 in FIG. 1 or the processor 400 in FIG. 4) may identify whether a predetermined second measurement reporting event occurs in operation 501. For example, when a measurement reporting period (e.g., L1 measurement reporting period) related to the candidate cell has arrived, it may be determined that the second measurement reporting event has occurred. For example, when the measurement reporting period (for example, L1 measurement reporting period) related to the candidate cell has not arrived, it may be determined that the second measurement reporting event has not occurred.

For example, in a state (e.g., RRC-connected state) of accessing the serving cell (e.g., the first cell 200 in FIG. 2 or the fourth cell 300 in FIG. 3), the processor 400 may control the communication circuitry 410 to transmit the L3 measurement result to the serving cell. For example, the processor 400 may acquire, through the communication circuitry 410, configuration information related to at least one candidate cell for L1/L2 triggered mobility or lower layer triggered mobility (LTM) from the serving cell. For example, the processor 400 may control the communication circuitry 410 to perform L1 measurement for the serving cell and at least one candidate cell, based on the configuration information related to at least one candidate cell. For example, the processor 400 may identify whether a L1 measurement reporting period (or time point) has arrived based on the configuration information related to at least one candidate cell. For example, the LTM may include a series of operations for switching (or moving) the cell (or serving cell) of the electronic device through signaling in a layer lower than layer 3 (L3). For example, the signaling in the layer lower than L3 may include signaling of L1 or signaling of L1 and L2. For example, L1 may include a physical layer of the electronic device 101. For example, L2 may include at least one of a media access control (MAC) layer, a radio link control (RLC) layer, a packet data convergence protocol (PDCP) layer, or a service data adaptation protocol (SDAP) layer. For example, the configuration information related to the at least one candidate cell may include information related to the frequency of the candidate cell, a synchronization signal (e.g., a synchronization signal block (SSB)), or L1 measurement. For example, the information related to the L1 measurement may include at least one of an L1 measurement time point (or period) or an L1 measurement reporting time point (or period). For example, the candidate cell may include at least one cell (e.g., the second cell 202 and the third cell 204 in FIG. 2, or the fifth cell 302 and the sixth cell 304 in FIG. 3) having the L3 channel measurement result that exceeds the predetermined first reference value among the cells (e.g., neighbor cells) accessible by the electronic device 101. For example, the channel measurement result may include at least one of a received signal strength indication (RSSI), a reference signal received quality (RSRQ), a reference signal received power (RSRP), a signal to noise ratio (SNR), a signal to interference and noise ratio (SINR), a quality of service (QoS), or a bit error rate (BER) of the cell measured by the electronic device 101.

According to an embodiment, when it is determined that the predetermined second measurement reporting event has not occurred (e.g., "No" in operation 501), the electronic device (e.g., the processor 120 or 400) may terminate an embodiment for reporting the measurement result. For example, the processor 400 may control the communication circuitry 410 to perform L1 measurement on the serving cell and at least one candidate cell, based on the configuration information related to at least one candidate cell until the measurement reporting period (or time point) related to the candidate cell arrives.

According to an embodiment, when it is determined that a predetermined second measurement reporting event has occurred (e.g., "Yes" in operation 501), the electronic device (e.g., the processor 120 or 400) may identify the traffic state (e.g., the amount of traffic) of the electronic device 101 and the serving cell in operation 503. For example, the traffic state may include a traffic state in the uplink and/or downlink that is continuously or periodically monitored by the electronic device 101 in a state in which the electronic device 101 accesses the serving cell in order to determine whether the electronic device 101 needs cell switching based on the LTM. For example, the traffic state may be identified (or estimated) based on at least one of the amount of data transmitted and/or received to and/or from the serving cell by the electronic device 101, a scheduling rate, the size of a transmission block (TB), or a buffer state.

According to an embodiment, the electronic device (e.g., the processor 120 or 400) may identify whether a predetermined measurement result update event has occurred based on the traffic state of the electronic device 101 and the serving cell in operation 505. For example, when it is determined that the electronic device 101 has traffic at the L1 measurement reporting time point, based on the traffic monitoring result, the processor 400 may determine that a predetermined measurement result update event has not occurred. For example, the state in which traffic exists may include a state in which the amount (e.g., average value) of data transmitted and/or received to and/or from the serving cell by the electronic device 101 exceeds a predetermined reference traffic amount for a predetermined first reference time earlier than the L1 measurement reporting time, a state in which the amount (e.g., average value) of data transmitted and/or received to and/or from the serving cell by the electronic device 101 at the L1 measurement reporting time exceeds a predetermined reference traffic amount, and a state in which it is estimated that the amount (e.g., average value) of data transmitted and/or received to and/or from the serving cell by the electronic device 101 for a predetermined second reference time after the L1 measurement reporting time exceeds a predetermined reference traffic amount. For example, the predetermined second reference time may be configured based on a reference time (e.g., the operation time of an inactivity timer) configured to determine whether to switch the electronic device 101 in the RRC-connected state to an RRC idle state or an RRC inactive state. For example, the predetermined reference traffic amount may indicate a reference value (e.g., 0) configured to determine whether the predetermined measurement result update event has occurred.

For example, when it is determined that the electronic device 101 has no traffic at the L1 measurement reporting time point, based on the traffic monitoring result, the processor 400 may determine that a predetermined measurement result update event has occurred. For example, the state in which no traffic exists may include a state in which the amount (e.g., average value) of data transmitted and/or received to and/or from the serving cell by the electronic device 101 for a predetermined first reference time earlier than the L1 measurement reporting time is equal to or less than a predetermined reference traffic amount, a state in which the amount (e.g., average value) of data transmitted and/or received to and/or from the serving cell by the electronic device 101 at the L1 measurement reporting time is equal to or less than a predetermined reference traffic amount, and a state in which it is estimated that the amount (e.g., average value) of data transmitted and/or received to and/or from the serving cell by the electronic device 101 for a predetermined second reference time after the L1 measurement reporting time is equal to or less than a predetermined reference traffic amount.

According to an embodiment, when it is determined that the predetermined measurement result update event has occurred (e.g., "Yes" in operation 505), the electronic device (e.g., the processor 120 or 400) may update the L1 measurement result related to the candidate cell in operation 507. For example, when it is determined that the predetermined measurement result update event has occurred, the processor 400 may determine that the electronic device operates in the restricted LTM mode. The processor 400 may update the L1 measurement result related to the candidate cell to the predetermined second reference value, so as not to attempt cell switching related to the electronic device 101 in the serving cell, based on the operation in the restricted LTM mode. For example, the predetermined second reference value may include a value smaller than the channel state of the first cell (e.g., serving cell) 200 or a predetermined minimum value.

According to an embodiment, the electronic device (e.g., the processor 120 or 400) may transmit, in operation 509, the L1 measurement result related to the serving cell and the updated L1 measurement result related to at least one candidate cell to the serving cell. For example, the updated L1 measurement result related to the candidate cell may include a difference value from the L1 measurement result related to the serving cell as in [Table 1] below.

**[Table 1]**

| CSI report number | CSI Fields |
|---|---|
| CSI report #n | SSBRI #1 |
| | SSBRI #2 |
| | SSBRI #3 |
| | RSRP #1 |
| | DIFFRSRP_15 (Δ -30dB) |
| | DIFFRSRP_15 (Δ -30dB) |

For example, SSBRI #i may include identification information of an i-th cell (e.g., serving cell and candidate cell), RSRP #1 may include channel state information of the serving cell, and DIFFRSRP_15 (Δ -30 dB) may include a difference value between the L1 measurement result related to the serving cell and the updated L1 measurement result of the i-th candidate cell.

According to an embodiment, when it is determined that the predetermined measurement result update event has not occurred (e.g., "No" in operation 505), the electronic device (e.g., the processor 120 or 400) may transmit the L1 measurement result related to the serving cell and at least one candidate cell to the serving cell in operation 509. For example, the L1 measurement result related to the candidate cell may include a difference value from the L1 measurement result related to the serving cell as in [Table 2] below.

**[Table 2]**

| CSI report number | CSI Fields |
|---|---|
| CSI report #n | SSBRI #1 |
| | SSBRI #2 |
| | SSBRI #3 |
| | RSRP #1 |
| | differential RSRP #2 |
| | differential RSRP #3 |

For example, SSBRI #i may include identification information of an i-th cell (e.g., serving cell and candidate cell), RSRP #1 may include channel state information of the serving cell, and differential RSRP #i may include a difference value between the L1 measurement result related to the serving cell and the L1 measurement result of the i-th candidate cell.

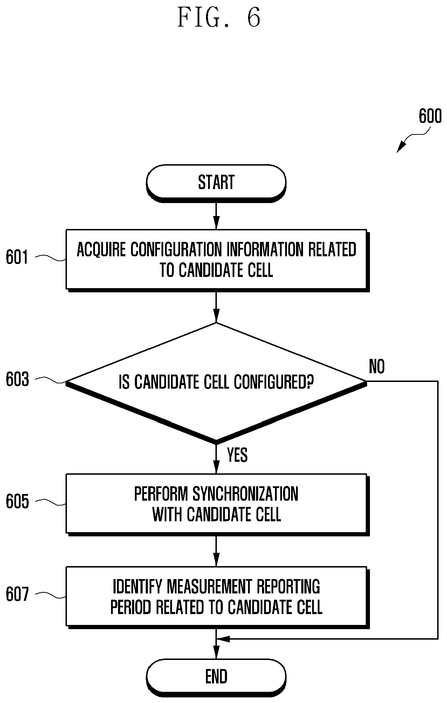

FIG. 6 is a flowchart 600 illustrating a process of identifying a measurement reporting period by an electronic device in an LTM environment according to an embodiment. For example, at least some of FIG. 6 may include the detailed operation of operation 501 of FIG. 5. In the following embodiments, respective operations may be sequentially performed but the sequential performance is not necessary. For example, orders of the operations may be changed, and at least two operations may be performed in parallel. For example, the electronic device of FIG. 6 may be the electronic device 101 of FIG. 1, 2, 3, or 4.

According to an embodiment referring to FIG. 6, the electronic device (e.g., the processor 120 in FIG. 1 or the processor 400 in FIG. 4) may acquire configuration information related to a candidate cell from a serving cell (e.g., the first cell 200 in FIG. 2 or the fourth cell 300 in FIG. 3) which the electronic device 101 accesses in operation 601. For example, the processor 400 may control the communication circuitry 410 to perform L3 channel measurement on the serving cell and cells (e.g., neighbor cells) accessible by the electronic device 101, based on configuration information related to the L3 channel measurement acquired from the serving cell. For example, the L3 channel measurement may include a series of operations of measuring the channel state of the cell for a predetermined time in the L3.

For example, the processor 400 may identify whether a predetermined first measurement reporting event occurs, based on the L3 channel measurement result. When it is determined that the predetermined first measurement reporting event has occurred, the processor 400 may control the communication circuitry 410 to transmit the L3 channel measurement result to the serving cell. For example, the predetermined first measurement reporting event may be generated when the channel state of the serving cell is lower than a predetermined third reference value, based on the L3 channel measurement result. For example, the predetermined first measurement reporting event may be generated when a cell having a channel state that is greater than the channel state of the serving cell by the predetermined third reference value or more exists among the cells accessible by the electronic device 101, based on the L3 channel measurement result.

For example, the processor 400 may acquire, through the communication circuitry 410, configuration information related to a candidate cell for L1/L2 triggered mobility or lower layer triggered mobility (LTM) from the serving cell, based on the L3 channel measurement result. For example, the configuration information related to a candidate cell may include whether the candidate cell exists, the frequency of the candidate cell, a synchronization signal (e.g., a synchronization signal block (SSB)), or information related to L1 measurement. For example, the information related to the L1 measurement may include at least one of an L1 measurement time point (or period) or an L1 measurement reporting time point (or period). For example, the candidate cell may include at least one cell (e.g., the second cell 202 and the third cell 204 in FIG. 2 or the fifth cell 302 and the sixth cell 304 in FIG. 3) having the L3 channel measurement result that exceeds a predetermined first reference value among the cells (e.g., neighbor cells) accessible by the electronic device 101.

For example, the processor 400 may control the communication circuitry 410 to perform L1 measurements for the serving cell and at least one candidate cell, based on the L1 measurement time point (or period) included in the configuration information related to the candidate cell.

According to an embodiment, the electronic device (e.g., a processor 120 or 400) may identify whether at least one candidate cell for performing cell switching based on the LTM is configured, based on configuration information related to the candidate cell, in operation 603.

According to an embodiment, when at least one candidate cell for performing cell switching is not configured (e.g., "No" in operation 603), the electronic device (e.g., the processor 120 or 400) may terminate an embodiment for identifying the measurement reporting period. For example, when the candidate cell is not configured or release information of the candidate cell is included in the configuration information related to the candidate cell acquired from the serving cell, the processor 400 may determine not to perform the cell switching based on the LTM. When it is determined that the cell switching based on the LTM is not performed, the processor 400 may control the communication circuitry 410 to limit the L1 measurement for the cell switching based on the LTM.

According to an embodiment, when at least one candidate cell for performing cell switching based on the LTM is configured (e.g., "Yes" in operation 603), the electronic device (e.g., the processor 120 or 400) may perform synchronization with at least one candidate cell, based on the configuration information related to the candidate cell, in operation 605. For example, the processor 400 may receive a synchronization signal (e.g., SSB) of at least one candidate cell through the communication circuitry 410, based on information related to the synchronization signal included in the configuration information related to the candidate cell. The processor 400 may perform DL synchronization with each candidate cell, based on a synchronization signal of at least one candidate cell. For example, the processor 400 may control the communication circuitry 410 to transmit information (e.g., RACH preamble) related to a random access channel (RACH) to each of at least one candidate cell.

According to an embodiment, the electronic device (e.g., processor 120 or 400) may identify whether a predetermined second measurement reporting event occurs, based on configuration information related to at least one candidate cell, in operation 607.

According to an embodiment, the electronic device 101 may perform UL synchronization with the candidate cell, based on a RACH response signal included in the control signal related to cell switching indicating cell switching of the electronic device 101, received from the serving cell.

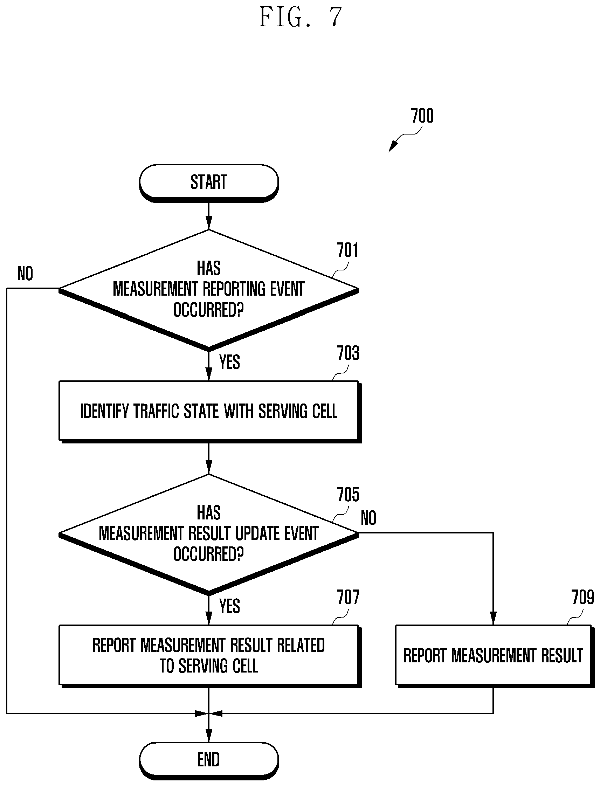

FIG. 7 is a flowchart 700 illustrating a process of optionally reporting a measurement result related to a candidate cell by an electronic device according to an embodiment. In the following embodiments, respective operations may be sequentially performed but the sequential performance is not necessary. For example, orders of the operations may be changed, and at least two operations may be performed in parallel. For example, the electronic device of FIG. 7 may be the electronic device 101 of FIG. 1, 2, 3, or 4.

According to an embodiment referring to FIG. 7, an electronic device (e.g., the processor 120 in FIG. 1 or the processor 400 in FIG. 4) may identify whether a predetermined second measurement reporting event has occurred in operation 701 For example, the processor 400 may identify whether a predetermined second measurement reporting event occurs, based on configuration information related to at least one candidate cell acquired from the serving cell (e.g., the first cell 200 in FIG. 2 or the fourth cell 300 in FIG. 3) as in operations 601 to 607 in FIG. 6. For example, when a measurement reporting period (e.g., L1 measurement reporting period) related to the candidate cell has arrived, it may be determined that the second measurement reporting event has occurred. For example, when the measurement reporting period (for example, L1 measurement reporting period) related to the candidate cell has not arrived, it may be determined that the second measurement reporting event has not occurred.

According to an embodiment, when it is determined that the predetermined second measurement reporting event has not occurred (e.g., "NO" in operation 701), the electronic device (e.g., the processor 120 or 400) may terminate an embodiment for reporting the measurement result. For example, the processor 400 may control the communication circuitry 410 to perform L1 measurement on the serving cell and at least one candidate cell, based on the configuration information related to at least one candidate cell until the measurement reporting period (or time point) related to the candidate cell arrives.

According to an embodiment, when it is determined that a predetermined second measurement reporting event has occurred (e.g., "Yes" in operation 701), the electronic device (e.g., the processor 120 or 400) may identify the traffic state (e.g., the amount of traffic) of the electronic device 101 and the serving cell in operation 703. For example, the traffic state may include a traffic state in the uplink and/or downlink that is continuously or periodically monitored by the electronic device 101 in a state in which the electronic device 101 accesses the serving cell in order to determine whether the electronic device 101 needs cell switching based on the LTM. For example, the traffic state may be identified (or estimated) based on at least one of the amount of data transmitted and/or received to and/or from the serving cell by the electronic device 101, a scheduling rate, the size of a transmission block (TB), or a buffer state.

According to an embodiment, the electronic device (e.g., the processor 120 or 400) may identify whether a predetermined measurement result update event has occurred based on the traffic state of the electronic device 101 and the serving cell in operation 705. For example, when it is determined that the electronic device 101 has traffic at the L1 measurement reporting time point, based on the traffic monitoring result, the processor 400 may determine that a predetermined measurement result update event has not occurred. For example, the state in which traffic exists may include a state in which the amount (e.g., average value) of data transmitted and/or received to and/or from the serving cell by the electronic device 101 for a predetermined first reference time earlier than the L1 measurement reporting time exceeds a predetermined reference traffic amount, a state in which the amount (e.g., average value) of data transmitted and/or received to and/or from the serving cell by the electronic device 101 at the L1 measurement reporting time exceeds a predetermined reference traffic amount, and a state in which it is estimated that the amount (e.g., average value) of data transmitted and/or received to and/or from the serving cell by the electronic device 101 for a predetermined second reference time after the L1 measurement reporting time exceeds a predetermined reference traffic amount. For example, the predetermined second reference time may be configured based on a reference time (e.g., the operation time of an inactivity timer) configured to determine whether to switch the electronic device 101 in the RRC-connected state to an RRC idle state or an RRC inactive state. For example, the predetermined reference traffic amount may indicate a reference value (e.g., 0) configured to determine whether the predetermined measurement result update event has occurred.

For example, when it is determined that the electronic device 101 has no traffic at the L1 measurement reporting time point, based on the traffic monitoring result, the processor 400 may determine that a predetermined measurement result update event has occurred. For example, the state in which no traffic exists may include a state in which the amount (e.g., average value) of data transmitted and/or received to and/or from the serving cell by the electronic device 101 for a predetermined first reference time earlier than the L1 measurement reporting time is equal to or less than a predetermined reference traffic amount, a state in which the amount (e.g., average value) of data transmitted and/or received to and/or from the serving cell by the electronic device 101 at the L1 measurement reporting time is equal to or less than a predetermined reference traffic amount, and a state in which it is estimated that the amount (e.g., average value) of data transmitted and/or received to and/or from the serving cell by the electronic device 101 for a predetermined second reference time after the L1 measurement reporting time is equal to or less than a predetermined reference traffic amount.

According to an embodiment, when it is determined that the predetermined measurement result update event has occurred (e.g., "Yes" in operation 705), the electronic device (e.g., the processor 120 or 400) may transmit, to the serving cell, the L1 measurement result related to the serving cell, excluding the L1 measurement result related to the candidate cell, so as not to attempt cell switching related to the electronic device 101 in the serving cell. For example, when it is determined that the predetermined measurement result update event has occurred, the processor 400 may determine that the electronic device operates in the restricted LTM mode. The processor 400 may control the communication circuitry 410 to limit transmission of the L1 measurement results related to the candidate cell, based on the operation in the restricted LTM mode. For example, the processor 400 may control the communication circuitry 410 to transmit, to the serving cell, the L1 measurement result which is configured to normally include the L1 measurement result related to the serving cell as in [Table 3] below but not to include the L1 measurement result related to the candidate cell.

**[Table 3]**

| CSI report number | CSI Fields |
|---|---|
| CSI report #n | SSBRI #1 |
| | RSRP #1 |

According to an embodiment, when it is determined that a predetermined measurement result update event has not occurred (e.g., "No" in operation 705), the electronic device (e.g., the processor 120 or 400) may transmit the L1 measurement result related to the serving cell and at least one candidate cell to the serving cell in operation 709.

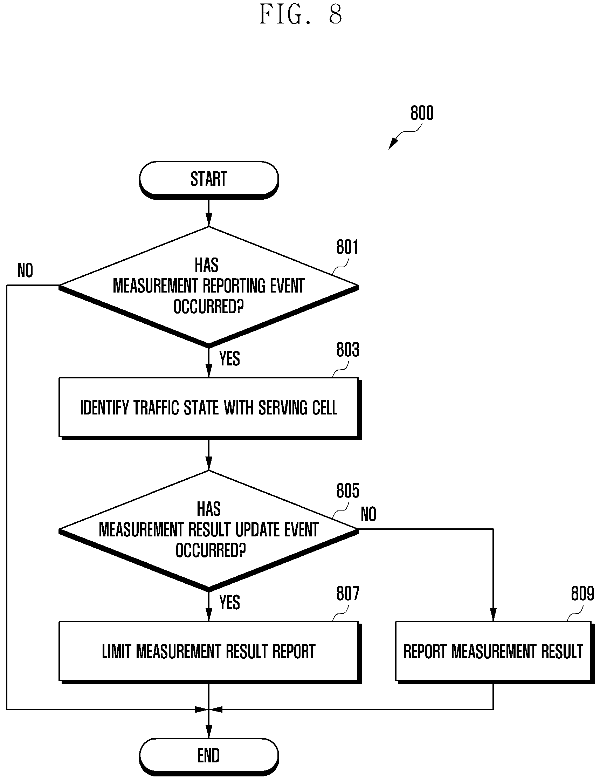

FIG. 8 is a flowchart 800 illustrating a process of optionally reporting a measurement result by an electronic device according to an embodiment. In the following embodiments, respective operations may be sequentially performed but the sequential performance is not necessary. For example, orders of the operations may be changed, and at least two operations may be performed in parallel. For example, the electronic device of FIG. 8 may be the electronic device 101 of FIG. 1, 2, 3, or 4.

According to an embodiment referring to FIG. 8, an electronic device (e.g., the processor 120 in FIG. 1 or the processor 400 in FIG. 4) may identify whether a predetermined second measurement reporting event has occurred in operation 801 For example, the processor 400 may identify whether a predetermined second measurement reporting event occurs, based on configuration information related to at least one candidate cell acquired from the serving cell (e.g., the first cell 200 in FIG. 2 or the fourth cell 300 in FIG. 3) as in operations 601 to 607 in FIG. 6. For example, when a measurement reporting period (e.g., L1 measurement reporting period) related to the candidate cell has arrived, it may be determined that the second measurement reporting event has occurred. For example, when the measurement reporting period (for example, L1 measurement reporting period) related to the candidate cell has not arrived, it may be determined that the second measurement reporting event has not occurred.

According to an embodiment, when it is determined that a predetermined second measurement reporting event has not occurred (e.g., "No" in operation 801), the electronic device (e.g., the processor 120 or 400) may terminate an embodiment for reporting the measurement result. For example, the processor 400 may control the communication circuitry 410 to perform L1 measurement on the serving cell and at least one candidate cell, based on the configuration information related to at least one candidate cell until the measurement reporting period (or time point) related to the candidate cell arrives.

According to an embodiment, when it is determined that a predetermined second measurement reporting event has occurred (e.g., "Yes" in operation 801), the electronic device (e.g., the processor 120 or 400) may identify the traffic state (e.g., the amount of traffic) of the electronic device 101 and the serving cell in operation 803. For example, the traffic state may include a traffic state in the uplink and/or downlink that is continuously or periodically monitored by the electronic device 101 in a state in which the electronic device 101 accesses the serving cell in order to determine whether the electronic device 101 needs cell switching based on the LTM. For example, the traffic state may be identified (or estimated) based on the amount of data transmitted and/or received to and/or from the serving cell by the electronic device 101, a scheduling rate, the TB size, or a buffer state.

According to an embodiment, the electronic device (e.g., the processor 120 or 400) may identify whether a predetermined measurement result update event has occurred based on the traffic state of the electronic device 101 and the serving cell in operation 805. For example, when it is determined that the electronic device 101 has traffic at the L1 measurement reporting time point, based on the traffic monitoring result, the processor 400 may determine that a predetermined measurement result update event has not occurred. For example, the state in which traffic exists may include a state in which the amount (e.g., average value) of data transmitted and/or received to and/or from the serving cell by the electronic device 101 for a predetermined first reference time earlier than the L1 measurement reporting time exceeds a predetermined reference traffic amount, a state in which the amount (e.g., average value) of data transmitted and/or received to and/or from the serving cell by the electronic device 101 at the L1 measurement reporting time exceeds a predetermined reference traffic amount, and a state in which it is estimated that the amount (e.g., average value) of data transmitted and/or received to and/or from the serving cell by the electronic device 101 for a predetermined second reference time after the L1 measurement reporting time exceeds a predetermined reference traffic amount. For example, the predetermined second reference time may be configured based on a reference time (e.g., the operation time of an inactivity timer) configured to determine whether to switch the electronic device 101 in the RRC-connected state to an RRC idle state or an RRC inactive state. For example, the predetermined reference traffic amount may indicate a reference value (e.g., 0) configured to determine whether the predetermined measurement result update event has occurred.

For example, when it is determined that the electronic device 101 has no traffic at the L1 measurement reporting time point, based on the traffic monitoring result, the processor 400 may determine that a predetermined measurement result update event has occurred. For example, the state in which no traffic exists may include a state in which the amount (e.g., average value) of data transmitted and/or received to and/or from the serving cell by the electronic device 101 for a predetermined first reference time earlier than the L1 measurement reporting time is equal to or less than a predetermined reference traffic amount, a state in which the amount (e.g., average value) of data transmitted and/or received to and/or from the serving cell by the electronic device 101 at the L1 measurement reporting time is equal to or less than a predetermined reference traffic amount, and a state in which it is estimated that the amount (e.g., average value) of data transmitted and/or received to and/or from the serving cell by the electronic device 101 for a predetermined second reference time after the L1 measurement reporting time is equal to or less than a predetermined reference traffic amount.

According to an embodiment, when it is determined that a predetermined measurement result update event has occurred (e.g., "Yes" in operation 805), the electronic device (e.g., the processor 120 or 400) may limit the transmission of the L1 measurement result so as not to attempt cell switching related to the electronic device 101 in the serving cell in operation 807. For example, when the L1 measurement report based on the event is configured from the serving cell, the processor 400 may control the communication circuitry 410, so as to limit the transmission of the L1 measurement result, based on the occurrence of the predetermined measurement result update event. For example, the L1 measurement report based on the event may include a series of operations of transmitting (or reporting) the L1 measurement result to the serving cell, based on whether a predetermined third measurement reporting event occurs based on the L1 measurement results of the serving cell and/or the candidate cell. For example, the predetermined third measurement reporting event may be generated when a channel state of the serving cell is lower than a predetermined fourth reference value, based on the L1 measurement result. For example, the predetermined third measurement reporting event may be generated when there is a candidate cell having the L1 measurement result that is higher than the L1 measurement result of the serving cell by the predetermined fourth reference value or more among the candidate cells.

According to an embodiment, when it is determined that a predetermined measurement result update event has not occurred (e.g., "No" in operation 805), the electronic device (e.g., the processor 120 or 400) may transmit the L1 measurement result related to the serving cell and at least one candidate cell to the serving cell in operation 809.

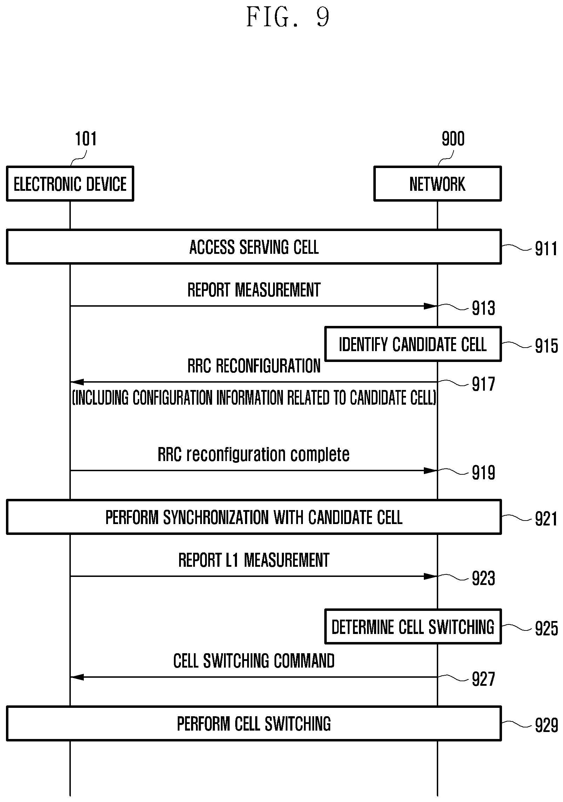

FIG. 9 illustrates an example for cell switching by an electronic device according to an embodiment.

According to an embodiment referring to FIG. 9, the electronic device 101 may access the serving cell (e.g., the first cell 200 in FIG. 2 or the fourth cell 300 in FIG. 3) of a network 900 (e.g., operation 911). For example, the network 900 may include the serving cell and at least one candidate cell as network entities supporting wireless communication of the electronic device 101.

According to an embodiment, in a state of accessing the serving cell, the electronic device 101 may transmit the L3 measurement result related to the serving cell and a cell (e.g., a neighbor cell) accessible by the electronic device 101 to the serving cell (e.g., operation 913). For example, the electronic device 101 may perform L3 channel measurement on the serving cell and the cell (e.g., the neighbor cell) accessible by the electronic device 101, based on configuration information related to the L3 channel measurement acquired from the serving cell. For example, the L3 channel measurement may include a series of operations of measuring the channel state of the cell for a predetermined time in the L3.

For example, when it is determined that a predetermined first measurement reporting event has occurred based on the L3 channel measurement result, the electronic device 101 may transmit the L3 channel measurement result to the serving cell. For example, the predetermined first measurement reporting event may be generated when the channel state of the serving cell is lower than a predetermined third reference value, based on the L3 channel measurement result. For example, the predetermined first measurement reporting event may be generated when a cell having a channel state that is greater than the channel state of the serving cell by the predetermined third reference value or more exists among the cells accessible by the electronic device 101, based on the L3 channel measurement result.

According to an embodiment, the serving cell of the network 900 may identify (or select) at least one candidate cell (e.g., the second cell 202 and/or the third cell 204 in FIG. 2 or the fifth cell 302 and/or the sixth cell 304 in FIG. 3) that the electronic device 101 may switch through the LTM, based on the L3 measurement result received from the electronic device 101 (e.g., operation 915). For example, the candidate cell may include at least one cell having the L3 channel measurement result that exceeds a predetermined first reference value among the cells (e.g., neighbor cells) accessible by the electronic device 101. For example, the channel measurement result may include at least one of a received signal strength indication (RSSI), a reference signal received quality (RSRQ), a reference signal received power (RSRP), a signal to noise ratio (SNR), a signal to interference and noise ratio (SINR), a quality of service (QoS), or a bit error rate (BER) of the cell measured by the electronic device 101.

According to an embodiment, the serving cell of the network 900 may transmit an RRC control signal (e.g., RRC reconfiguration) including configuration information related to at least one candidate cell to the electronic device 101 (e.g., operation 917). For example, the configuration information related to at least one candidate cell may include information related to the frequency, a synchronization signal (e.g., SSB), or L1 measurement of the candidate cell. For example, the information related to the L1 measurement may include at least one of an L1 measurement time point (or period) or an L1 measurement reporting time point (or period).

According to an embodiment, when receiving the RRC control signal from the serving cell, the electronic device 101 may transmit an RRC response signal (e.g., RRC reconfiguration complete) to the serving cell of the network 900 (e.g., operation 919). For example, when succeeding in decoding the RRC control signal received from the serving cell, the electronic device 101 may transmit the RRC response signal to the serving cell of the network 900.

According to an embodiment, the electronic device 101 may perform downlink (DL) and/or uplink (UL) synchronization with at least one candidate cell, based on the configuration information related to at least one candidate cell (e.g., operation 921). For example, the electronic device 101 may receive a synchronization signal of at least one candidate cell, based on information related to a synchronization signal included in the configuration information related to at least one candidate cell. The electronic device 101 may perform DL synchronization with each candidate cell, based on the synchronization signal of at least one candidate cell. For example, the electronic device 101 may transmit information (e.g., a random access channel (RACH) preamble) related to a RACH to each candidate cell to achieve UL synchronization with at least one candidate cell.

According to an embodiment, the electronic device 101 may perform L1 measurement on the serving cell and at least one candidate cell, based on the configuration information related to at least one candidate cell. For example, when the L1 channel time point (or period) acquired from the serving cell arrives, the electronic device 101 may perform the L1 channel measurement on the serving cell and at least one candidate cell (e.g., the second cell 202 and the third cell 204 in FIG. 2 or the fifth cell 302 and the sixth cell 304 in FIG. 3). For example, the L1 channel measurement may include a series of operations for measuring the channel state of the cell, based on a signal processed in layer 1 (L1).

According to an embodiment, when it is determined that a predetermined second measurement reporting event has occurred, the electronic device 101 may adaptively report the L1 measurement result, based on the traffic state of the electronic device 101 (e.g., operation 923). For example, when the L1 measurement reporting time (or period) arrives, the electronic device 101 may determine that the predetermined second measurement reporting event has occurred. For example, the traffic state may include a traffic state in the uplink and/or downlink that is continuously or periodically monitored by the electronic device 101 in a state in which the electronic device 101 accesses the serving cell in order to determine whether the electronic device 101 needs cell switching based on the LTM. For example, the traffic state may be identified, based on the amount of data transmitted and/or received to and/or from the serving cell by the electronic device 101. For example, the traffic state may be identified (or estimated) based on at least one of a transmission block (TB) size, a scheduling rate, or a buffer state..

For example, the electronic device 101 may identify whether a predetermined measurement result update event occurs based on the traffic state of the electronic device 101. For example, when it is determined that the electronic device 101 has traffic at the L1 measurement reporting time point, the electronic device 101 may determine that the predetermined measurement result update event has not occurred. For example, the state in which traffic exists may include a state in which the amount of data (e.g., an average value) transmitted and/or received to and/or from the serving cell by the electronic device 101 for a predetermined first reference time earlier than the L1 measurement reporting time point exceeds a predetermined reference traffic amount, based on the monitoring result of traffic, a state in which the amount of data (e.g., an average value) transmitted and/or received to and/or from the serving cell by the electronic device 101 at the L1 measurement reporting time point exceeds a predetermined reference traffic amount, based on the monitoring result of traffic, and a state in which it is estimated that the amount of data (e.g., an average value) transmitted and/or received to and/or from the serving cell by the electronic device 101 during a predetermined second reference time after the L1 measurement reporting time point exceeds a predetermined reference traffic amount. For example, the predetermined reference traffic amount may indicate a reference value (e.g., 0) configured to determine whether the predetermined measurement result update event has occurred.

For example, when it is determined that there is no traffic in the electronic device 101 at the L1 measurement reporting time point, based on the traffic monitoring result, the electronic device 101 may determine that the predetermined measurement result update event has occurred. For example, the state in which no traffic exists may include a state in which the amount of data (e.g., an average value) transmitted and/or received to and/or from the serving cell by the electronic device 101 for a predetermined first reference time earlier than the L1 measurement reporting time point is equal to or smaller than a predetermined reference traffic amount, based on the monitoring result of traffic, a state in which the amount of data (e.g., an average value) transmitted and/or received to and/or from the serving cell by the electronic device 101 at the L1 measurement reporting time point is equal to or smaller than a predetermined reference traffic amount, based on the monitoring result of traffic, and a state in which it is estimated that the amount of data (e.g., an average value) transmitted and/or received to and/or from the serving cell by the electronic device 101 during a predetermined second reference time after the L1 measurement reporting time point is equal to or smaller than a predetermined reference traffic amount. For example, the predetermined second reference time may be configured based on a reference time (e.g., the operation time of an inactivity timer) configured to determine whether to switch the electronic device 101 in the radio resource control (RRC)-connected state to an RRC idle state or an RRC inactive state.

For example, when it is determined that a predetermined measurement result update event has not occurred based on the traffic state of the electronic device 101, the electronic device 101 may determine that the electronic device operates in an LTM mode. The electronic device 101 may transmit an L1 measurement result related to the serving cell and at least one candidate cell to the serving cell, based on the LTM mode.

For example, when it is determined that the predetermined measurement result update event has occurred, based on the traffic state of the electronic device 101, the electronic device 101 may determine that the electronic device operates in a restricted LTM mode. The electronic device 101 may update the L1 measurement result related to at least one candidate cell to a predetermined second reference value so as not to attempt cell switching related to the electronic device 101 in the serving cell, based on the restricted LTM mode. The electronic device 101 may transmit the L1 measurement result related to the serving cell and the updated L1 measurement result related to at least one candidate cell to the serving cell. For example, the predetermined second reference value may include a value smaller than the channel state of the first cell (e.g., serving cell) 200 or a predetermined minimum value.

For example, when it is determined that the predetermined measurement result update event has occurred, based on the traffic state of the electronic device 101, the electronic device 101 may determine that the electronic device operates in a restricted LTM mode. The electronic device 101 may transmit, to the serving cell, the L1 measurement result related to the serving cell, excluding the updated L1 measurement result related to at least one candidate cell, so as not attempt cell switching related to the electronic device 101 in the serving cell, based on the restricted LTM mode. For example, the L1 measurement result related to at least one candidate cell may limit the transmission of the serving cell.

For example, when it is determined that the predetermined measurement result update event has occurred, based on the traffic state of the electronic device 101, the electronic device 101 may determine that the electronic device operates in a restricted LTM mode. The electronic device 101 may limit the transmission of the L1 measurement result, so as not to attempt cell switching related to the electronic device 101 in the serving cell, based on a limited LTM mode.

According to an embodiment, the serving cell of the network 900 may determine whether cell switching of the electronic device 101 is necessary, based on the L1 measurement result received from the electronic device 101 (e.g., operation 925). For example, when there is a candidate cell having the L1 measurement result that is higher than the L1 measurement result of the serving cell by a predetermined fourth reference value or more among at least one candidate cell, the serving cell may determine that the cell switching of the electronic device 101 is needed. For example, the candidate cell having the L1 measurement result higher than the L1 measurement result of the serving cell by the predetermined fourth reference value or more may be selected (or determined) as a cell for performing cell switching by the electronic device 101.

For example, when there is no candidate cell having the L1 measurement result higher than the L1 measurement result of the serving cell by a predetermined fifth reference value or more among at least one candidate cell, the serving cell may determine that cell switching of the electronic device 101 is not needed.

For example, when no L1 measurement result related to at least one candidate cell is identified, the serving cell may determine that cell switching of the electronic device 101 is not needed.

According to an embodiment, when it is determined that cell switching of the electronic device 101 is needed, the serving cell of the network 900 may transmit a control signal (e.g., cell switch command) related to the cell switching to the electronic device 101 (e.g., operation 927). For example, the control signal related to the cell switching may include information related to a candidate cell (e.g., the second cell 202 or the third cell 204 in FIG. 2, or the fifth cell 302 or the sixth cell 304 in FIG. 3) for performing the cell switching by the electronic device 101.

According to an embodiment, when receiving the control signal related to the cell switching from the serving cell, the electronic device 101 may perform the cell switching to a candidate cell included in the control signal related to the cell switching (e.g., operation 929). For example, the electronic device 101 may perform UL synchronization with a candidate cell for performing the cell switching, based on a response signal for information on a RACH included in the control signal related to the cell switching. The electronic device 101 may perform switching (or movement) to a candidate cell included in the control signal related to the cell switching, based on the configuration information related to the candidate cell acquired from the serving cell and the synchronization information with the candidate cell.

According to an embodiment, when DL and/or UL synchronization with the candidate cell for performing the cell switching is not performed, the electronic device 101 may additionally perform DL and/or UL synchronization through a RACH procedure with the candidate cell.

According to an embodiment a method of operating an electronic device (e.g., the electronic device 101 of FIG. 1, 2, 3, or 4) may include an operation of, when it is determined that a measurement reporting event related to at least one candidate cell has occurred in a communication environment in which cell switching is performed through signaling of layer 1 (L1) and/or layer 2 (L2), identifying a traffic state with a serving cell. According to an embodiment, the method of operating the electronic device may include an operation of, when it is determined that an event related to an update of a measurement report has occurred based on the traffic state with the serving cell, updating a measurement result related to the at least one candidate cell to a predetermined reference value or less, so as not to attempt cell switching related to the electronic device in the serving cell. According to an embodiment, the method of operating the electronic device may include an operation of transmitting the updated measurement result related to the at least one candidate cell to the serving cell, so as not to attempt cell switching related to the electronic device in the serving cell.

According to an embodiment, the method of operating the electronic device may include an operation of acquiring configuration information related to the at least one candidate cell from the serving cell in a state of accessing the serving cell, based on a communication environment in which cell switching is performed through the signaling of L1 and/or L2. According to an embodiment, the method of operating the electronic device may include an operation of performing synchronization related to at least one of downlink (DL) or uplink (UP) with the at least one candidate cell.

According to an embodiment, the method of operating the electronic device may include an operation of, when that it is estimated that an amount of traffic with the serving cell for a predetermined first time is equal to or lower than a predetermined reference amount, based on determination that the measurement reporting event related to the at least one candidate cell, determining that the event related to the update of the measurement report has occurred.

According to an embodiment, the predetermined first time is configured based on a time interval configured to switch a radio resource control (RRC) state with the serving cell.

According to an embodiment, the method of operating the electronic device may include an operation of, when it is identified that an amount of traffic with the serving cell for a predetermined second time is equal to or lower than a predetermined reference amount, based on determination that the measurement reporting event related to the at least one candidate cell, determining that the event related to the update of the measurement report has occurred.

According to an embodiment, the predetermined reference value may be configured based on the measurement result of the serving cell.

According to an embodiment, the method of operating the electronic device may include an operation of, when it is determined that the event related to the update of the measurement report has not occurred based on an amount of traffic with the serving cell, transmitting the measurement result related to the at least one candidate cell to the serving cell.

According to an embodiment, the method of operating the electronic device may include an operation of, when a measurement reporting period related to at least one candidate cell acquired from the serving cell has arrived in a communication environment in which cell switching is performed through the signaling of L1 and/or L2, determining that the measurement reporting event has occurred.

The embodiments of the disclosure set forth in the description and the drawings are presented only to easily describe the technical contents according to the embodiments of the disclosure and to assist in understanding the embodiments of the disclosure, and the embodiments of the disclosure are not intended to limit the scope of the embodiments of the disclosure. Therefore, the scope of the embodiments of the disclosure should be construed to include all changes or modified forms derived from the technical idea of the embodiments of the disclosure as well as the embodiments set forth herein.

## Claims

1. An electronic device (101) comprising:
communication circuitry (410);
at least one processor (400) includin processing circuitry; and
memory (420) storing instructions
wherein instructions, when executed by the at least one processor (400) individually or collectively, cause the electronic device (101) to:
in case of determining that a measurement reporting event related to at least one candidate cell has occurred in a communication environment in which cell switching is performed through signaling of layer 1 (L1) and/or layer 2 (L2), identify a traffic state with a serving cell;
in case of, based on the traffic state with the serving cell, determining that an event related to an update of a measurement report has occurred, update a measurement result related to the at least one candidate cell to a predetermined reference value or less, so as not to attempt cell switching related to the electronic device in the serving cell; and
transmit the updated measurement result related to the at least one candidate cell to the serving cell.

2. The electronic device (101) of claim 1, wherein the instructions, when executed by the at least one processor (400) individually or collectively, cause the electronic device (101) to:
acquire configuration information related to the at least one candidate cell from the serving cell in a connected state with the serving cell; and
perform synchronization related to at least one of a downlink (DL) or uplink (UP) with the at least one candidate cell.

3. The electronic device (101) of claim 1, wherein the instructions, when executed by the at least one processor (400) individually or collectively, cause the electronic device (101) to, in case of, based on the determination that the measurement reporting event related to the at least one candidate cell has occurred, estimating that an amount of traffic with the serving cell is equal to or less than a predetermined reference amount for a predetermined first time, determine that the event related to the update of the measurement report has occurred.

4. The electronic device (101) of claim 3, wherein the predetermined first time is configured based on a time interval configured to switch a radio resource control (RRC) state with the serving cell.

5. The electronic device (101) of claim 1, wherein the instructions, when executed by the at least one processor (400) individually or collectively, cause the electronic device (101) to, in case of, based on the determination that the measurement reporting event related to the at least one candidate cell has occurred, identifying that an amount of traffic with the serving cell is equal to or less than a predetermined reference amount for a predetermined second time, determine that the event related to the update of the measurement report has occurred.

6. The electronic device (101) of claim 1, wherein the instructions, when executed by the at least one processor (400) individually or collectively, cause the electronic device (101) to, in case of, based on an amount of traffic with the serving cell, determining that the event related to the update of the measurement report has not occurred, transmit the measurement result related to the at least one candidate cell to the serving cell.

7. The electronic device (101) of claim 1, wherein the instructions, when executed by the at least one processor (400) individually or collectively, cause the electronic device (101) to, in case that a measurement reporting period related to at least one candidate cell, acquired from the serving cell, has arrived in the communication environment in which cell switching is performed through the signaling of L1 and/or L2, determine that the measurement reporting event has occurred.

8. The electronic device (101) of claim 1, wherein the instructions, when executed by the at least one processor (400) individually or collectively, cause the electronic device (101) to transmit a measurement result related to the serving cell and a difference value between the measurement result related to the serving cell and the updated measurement result related to the at least one candidate cell to the serving cell.

9. A method of operating an electronic device (101), the method comprising:
in case of determining that a measurement reporting event related to at least one candidate cell has occurred in a communication environment in which cell switching is performed through signaling of layer 1 (L1) and/or layer 2 (L2), identifying a traffic state with a serving cell;
in case of, based on the traffic state with the serving cell, determining that an event related to an update of a measurement report has occurred, updating a measurement result related to the at least one candidate cell to a predetermined reference value or less, so as not to attempt cell switching related to the electronic device in the serving cell; and
transmitting the updated measurement result related to the at least one candidate cell to the serving cell.

10. The method of claim 9, further comprising:
acquiring configuration information related to the at least one candidate cell from the serving cell in a connected state with the serving cell, based on the communication environment in which cell switching is performed through the signaling of L1 and/or L2; and
performing synchronization related to at least one of a downlink (DL) or uplink (UP) with the at least one candidate cell.

11. The method of claim 9, further comprising, in case of, based on the determination that the measurement reporting event related to the at least one candidate cell has occurred, estimating that an amount of traffic with the serving cell is equal to or less than a predetermined reference amount for a predetermined first time, determining that the event related to the update of the measurement report has occurred.

12. The method of claim 9, further comprising, in case of, based on the determination that the measurement reporting event related to the at least one candidate cell has occurred, identifying that an amount of traffic with the serving cell is equal to or les than a predetermined reference amount for a predetermined second time, determining that the event related to the update of the measurement report has occurred.

13. The method of claim 9, further comprising, in case of, based on an amount of traffic with the serving cell, determining that the event related to the update of the measurement report has not occurred, transmitting the measurement result related to the at least one candidate cell to the serving cell.

14. The method of claim 9, further comprising, in case that a measurement reporting period related to at least one candidate cell, acquired from the serving cell, has arrived in the communication environment in which cell switching is performed through the signaling of L1 and/or L2, determining that the measurement reporting event has occurred.

15. A non-transitory computer-readable storage medium storing one or more programs, the one or more programs comprising instructions that, when executed by a processor of an electronic device, cause the electronic device to perform operations of:
in case of determining that a measurement reporting event related to at least one candidate cell has occurred in a communication environment in which cell switching is performed through signaling of layer 1 (L1) and/or layer 2 (L2), identifying a traffic state with a serving cell;
in case of, based on the traffic state with the serving cell, determining that an event related to an update of a measurement report has occurred, updating a measurement result related to the at least one candidate cell to a predetermined reference value or less, so as not to attempt cell switching related to the electronic device in the serving cell; and
transmitting the updated measurement result related to the at least one candidate cell to the serving cell.
